# EUROPÄISCHE PATENTSCHRIFT

(11) **EP 0 697 095 B1**
(45) Veröffentlichungstag und Bekanntmachung des Hinweises auf die Patenterteilung: **01.04.1998**
(21) Anmeldenummer: 94916212.7
(22) Anmeldetag: 06.05.1994
(51) Int. Cl.: G01B 7/16, G01B 7/24, G01N 25/16

(54) **HOCHTEMPERATUR-DEHNUNGSAUFNEHMER**
HIGH-TEMPERATURE EXTENSOMETER
CAPTEUR EXTENSOMETRIQUE POUR TEMPERATURES ELEVEES

(30) Priorität: 08.05.1993 DE 4315387
(43) Veröffentlichungstag der Anmeldung: 21.02.1996
(73) Patentinhaber: INDUSTRIEANLAGEN-BETRIEBSGESELLSCHAFT M.B.H., D-85521 Ottobrunn (DE)
(72) Erfinder: GAUS, Rainer, D-83607 Holzkirchen (DE); ZAUNER, Stefan, D-83734 Hausham (DE); GESELL, Günther, D-83552 Stephanskirchen (DE)
(74) Vertreter: Bohnenberger, Johannes, Dr.
(86) Internationale Anmeldenummer: EP9401464
(87) Internationale Veröffentlichungsnummer: WO9427112

(56) Entgegenhaltungen:
- DE-A- 3 714 185
- FR-A- 2 611 046
- FR-A- 2 616 901
- NL-A- 8 700 084
- INTERNATIONAL JOURNAL OF HIGH TECHNOLOGY CERAMICS, Bd.4, 1988 Seiten 161 - 179 K.C.LIU ; H.PIH. ; D.W.VOORHES. 'uniaxial tensile strain measurement for ceramic testing at elevated temperatures : requirements , problems , and solutions'
- REVIEW OF SCIENTIFIC INSTRUMENTS., Bd.54, Nr.2, Februar 1983, NEW YORK US Seiten 226 - 228 D.J.QUESNEL AND J.C.TSOU 'extensometer extender for conversion of room-temperature extensometers for high temperature applications'

## Beschreibung

Die Erfindung betrifft einen flüssigkeitsgekühlten Dehnungsaufmehmer für Dehnungsmessungen vorzugsweise an heißen Proben und Bauteilen, der Anwendungsbereich liegt zwischen Raumtemperatur und ca. 2300°C mit einem bevorzugten Arbeitsbereich bis ca. 1800°C. Der erfindungsgemäße Dehnungsaufnehmer ist bei Normaldruck ebenso einsetzbar wie im Hochvakuum, der Einsatz im Überdruckbereich ist ebenfalls möglich. Normalerweise wird der erfindungsgemäße Hochtemperatur-Dehnungsaufnehmer in Luftatmosphäre eingesetzt. Jedoch ist der Einsatz ebenso möglich in beliebigen gasförmigen Medien, wobei bei korrosiven oder aggressiven Medien entsprechende Anforderungen an die Materialauswahl gestellt werden müssen. Erfindungswesentlich ist, daß die Dehnungsmessungen unabhängig von Relativbewegungen des Meßobjektes im mm-Bereich möglich sind, d.h. eventuelle Relativbewegungen des Meßobjektes während des Meßvorgangs in allen drei Raumkoordinaten werden inhärent kompensiert.

Der bisherige Stand der Technik ist gekennzeichnet durch Dehnungsaufnehmer, die diese Kompensation nicht erbringen. Weiterhin ist bei den bisherigen Dehnungsaufnehmern die hohe Meßgenauigkeit, insbesondere in den Temperaturbereichen ca. von 1500°C - 1800°C, nicht gewährleistet. Ebenso ist die gezielte reproduzierbare Positionierungsmöglichkeit der Meßtasterspitzen bisher nicht gegeben. Außerdem sind die Meßergebnisse bei Dehnungsaufnehmern bisheriger Bauart, abgesehen von teuren Spezialausführungen, abhängig vom atmosphärischen Druck.

Eine gattungsgemäße Meßvorrichtung ist bereits in "International Journal of High Technology Ceramics", Bd. 4, 1988, S. 161-179, K.C. LIU et al.: Uniaxial tensile strain measurement for ceramic testing at elevated temperatures" beschrieben.

Ziel der Erfindung ist es, einen Dehnungsaufnehmer bereitzustellen, der auch bei hohen Temperaturen des Meßobjektes bis ca. 1800°C und der Umgebungstemperatur bis ca. 150°C zuverlässige Meßergebnisse liefert.

Diese Aufgabe wird gelöst mit einer Meßvorrichtung nach den Merkmalen des Patentanspruchs 1. Vorteilhafte Weiterbildungen sind in den Unteransprüchen angegeben.

Die Erfindung wird nachstehend, auch hinsichtlich weiterer Merkmale und Vorteile anhand der Beschreibung eines Ausführungsbeispiels näher erläutert. Hierbei zeigen:
- Fig. 1: einen Meßtaster gemäß einer Ausführungsform der Erfindung;
- Fig. 2: eine Schnittansicht des Meßtasters entlang der Linie C-C in Fig. 1;
- Fig. 3: eine Schnittansicht des Meßtasters entlang der Linie A-A in Fig. 1;
- Fig. 4: eine Schnittansicht des Meßtasters entlang der Linie B-B in Fig. 1;
- Fig. 5: eine Schnittansicht des Meßtasters entlang der Linie D-D in Fig. 1.

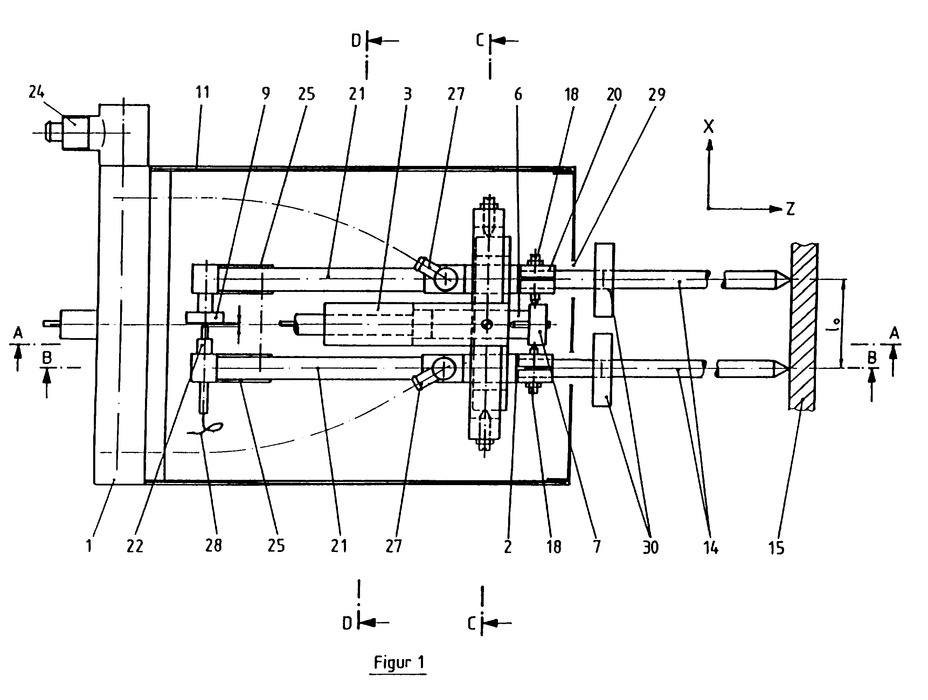

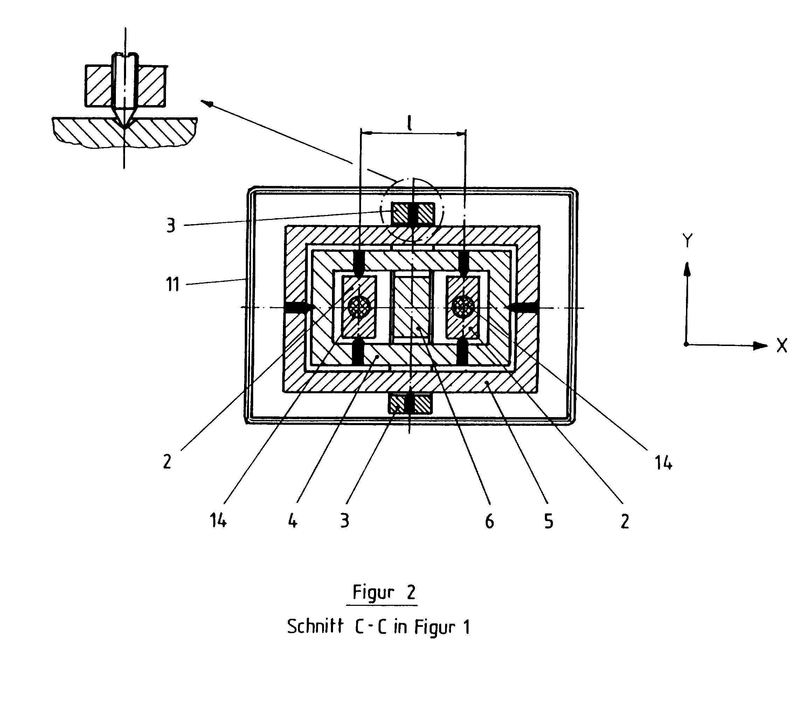

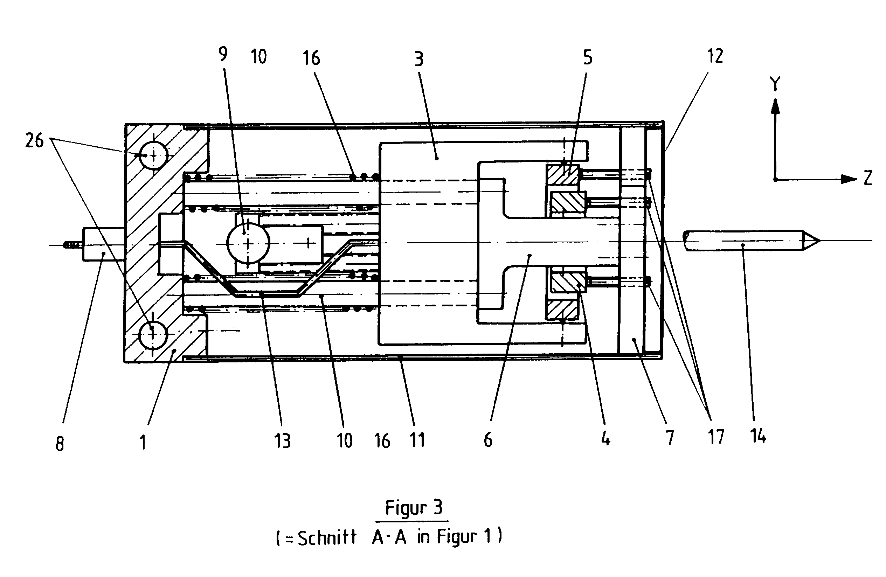

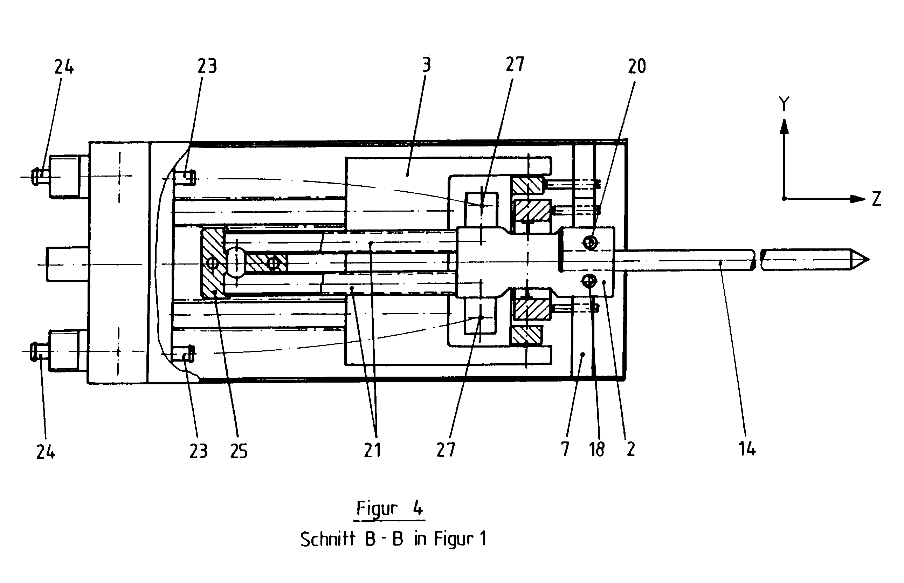

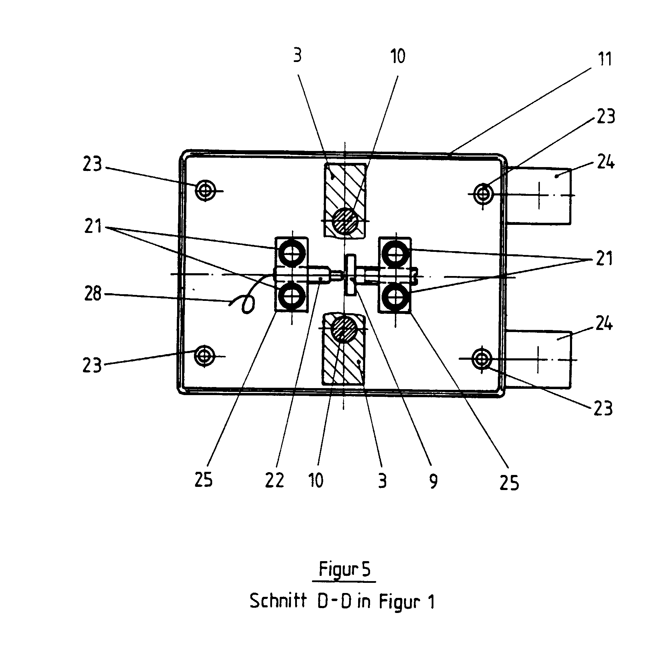

Die beiden Meßtaster 14, die mit ihren Spitzen auf dem Meßobjekt 15 aufsitzen (Fig. 1) sind in inneren Blöcken 2 angeordnet und zweiachsig kardanisch in einem inneren Rahmen 4, einem äußeren Rahmen 5 und einem äußeren Block 3 aufgehängt (Fig. 2). Um die Relativbewegung der beiden Meßtaster 14 nur in einer definierten Meßrichtung X innerhalb der Bewegungsebene zu erhalten bzw. nur dort zuzulassen, ist jeder Meßtaster 14 separat für sich nochmals im inneren Rahmen 4 kardanisch aufgehängt (Fig. 2). Der äußere Block 3 des kardanisch Systems ist mit einer Basisplatte 1 durch eine Linearführung, realisiert durch zwei Führungsstangen 10, verbunden, wobei der Block 3 auf den Führungsstangen 10 in Längsrichtung Z der Meßvorrichtung gleiten kann (Fig. 3 und Fig. 5). Andere Linearführungen des Blocks 3 z. B. mittels Rollen, sind ebenfalls möglich. Zwei zylindrische Druckfedern 16 drücken den Block 3 und damit die gesamte kardanische Aufhängung inklusive Meßtaster 14 im Ruhezustand über den Block 6 gegen die einstellbaren Arretierbolzen 17, die in dem Arretierblock 7 eingeschraubt sind. Unabhängig davon wird die Anfangsmeßlänge lₒ (Fig. 1), im Ruhezustand über zwei weitere Arretierbolzen 18 und den Arretierblock 7 eingestellt. Die Meßtaster 14 sind ebenfalls mit Arretierbolzen 18 in dem Arretierblock 7 eingespannt und damit fixiert. Um die Meßbasis (lₒ in Fig. 1) prinzipiell variabel zu halten, sind auch auswechselbare Klemmvorrichtungen 20 mit kleinerer oder größerer Basis vorgesehen.

Wird der Dehnungsaufnehmer an die Probe angefahren, dann werden durch Verschiebung des Blocks 3 die Arretierungsbolzen 17 und 18 freigesetzt, wodurch die Meßtaster 14 die Bewegungsfreiheit in Meßrichtung X sowie die Bewegungsfreiheit zur räumlichen Kompensation von Bewegungen des Meßobjektes in der x-y-Ebene erhalten.

Die Meßtaster 14 sind an ihrer Basis im inneren Block 2 mit der Einspannung 20 eingespannt (Figur 4). Ebenfalls an Block 2, jedoch gegenüberliegend, sind zwei Rohrpaare 21 angebracht, die den Meßaufnehmer 22 mit Gegenplatte 9 tragen. Das ganze Meßsystem mit Meßtastern 14, der kardanischen Aufhängung und dem Meßaufnehmer 22 ist so ausgebildet, daß eine Bewegung der Meßtasterspitzen in der x-y-Ebene zu einer entsprechenden Auslenkung des Meßaufnehmers 22, jedoch in entgegengesetzter Bewegungsrichtung, führt. Ein Meßsignal für eine Dehnung wird jedoch nur erzeugt, wenn sich der Abstand zwischen den Meßtasterspitzen ändert. Ausdrücklich Bestandteil der Erfindung sind Ausführungen mit mehr als zwei Meßtastern 14, beispielsweise mit vier Meßtastern und zwei um 90° versetzten Meßaufnehmern 22 zur gleichzeitigen Dehnungsmessung in x- und y-Richtung. Eine vereinfachte Ausführung zur zweidimensionalen Dehnungsmessung ist auch realisierbar durch ein System mit zwei Tastern, bei dem zwei Meßaufnehmer 22 in einem Winkel, vorzugsweise 90°, gegeneinander versetzt sind. Sinngemäß ist eine Messung in Z-Richtung durch einen dritten Meßaufnehmer 22 möglich.

Das erfindungsgemäße Meßsystem benötigt beim Hochtemperatureinsatz eine wirksame Kühlung, die wie folgt realisiert wird: Durch einen der beiden Außenanschlüsse 24 (Figur 4) wird das Kühlmittel, vorzugsweise Wasser, in einen Kühlkanal 26 (Figur 3) eingeleitet, von wo es durch zwei Nippel 23, durch flexible Schläuche (in Figur 1 und 4 angedeutet) in zwei Nipel 27 und von dort durch die Rohre 21 und die Aufnehmerbasis 25 läuft. Entsprechend erfolgt der Kühlmittelabfluß. Das Meßsystem ist in einem Gehäuse 11 untergebracht. Die beschriebene Kühlung führt dazu, daß insbesondere der (die) Meßaufnehmer 22 kontrolliert gekühlt und durch das Gehäuse vor Konvektionseinflüssen geschützt ist (sind). Vorteilhaft ist die wirkungsvolle Kühlung der Basisplatte 1, weil dadurch das Innere des Gehäuses 11 insgesamt gekühlt wird.

Die Ableitung der Signale des Meßaufnehmers 22 erfolgt zweckmäßig über ein hochflexibles Miniaturkabel 28, das zur nachfolgenden Signalverarbeitung nach außen geführt wird.

Um eine reproduzierbare Justierung des Meßsystems zu gewährleisten, ist es erforderlich, die Anpreßkraft der Meßtasterspitzen auf das Meßobjekt 15 zu bestimmen. Zusätzlich müssen Bewegungen des Meßobjektes 15 in Z-Richtung kontrollierbar sein. Dazu wird die Verschiebung des Blocks 3, bezogen auf die Basisplatte 1 gemessen, indem ein Taststift 13 mit Meßmarken mehr oder weniger weit aus der Hülse 8 austritt. Der Taststift 13 ist fest mit Block 3, z.B. durch Lötung, verbunden. Der Taststift 13 ist durch eine Kröpfung um die Gegenplatte 9 herumgeführt (Figur 3).

Besondere Anforderungen bestehen an die Materialeigenschaften der Meßtaster 14: Sie müssen chemisch kompatibel bei der Einsatztemperatur zum Meßobjekt 15 sein, sie müssen steif und leicht sein. Deshalb werden hierfür vorzugsweise keramische und faserkeranische Werkstoffe, z.B. Al₂O₃ oder oxidationsgeschützes C/C, eingesetzt.

Um Direkteinstrahlungen vom heißen Meßobjekt 15 durch die Meßtasteröffnungen 29 zu verhindern, wird auf jeden Meßtaster 14 ein Strahlenschutz 30 aufgesetzt.

Gegenüber Meßsystemen nach dem Stand der Technik zeichnet sich das erfindungsgemäße Meßsystem bei deutlich höheren Leistungsmerkmalen durch einen signifikant niedrigeren Herstellungspreis aus.

## Patentansprüche

1. Meßvorrichtung zum Messen von thermisch oder mechanisch bedingten Dehnungen im Bereich hoher Temperaturen des Meßobjektes bis ca. 2300°C mit vorzugsweisem Arbeitsbereich von Raumtemperatur bis ca. 1600°C und mit druckbezogenem Einsatzbereich vom Vakuum bis ca. 100 bar, gekennzeichnet durch die Kombination folgender Merkmale:
- Zwei Meßtaster (14) sind in je einem inneren Block (2) eingespannt,
- Die im Abstand 1 angeordneten inneren Blöcke (2) sind unabhängig voneinander um ihre Hochachsen (Y-Richtung) drehbar in einem inneren Rahmen (4) gelagert,
- Der innere Rahmen (4) ist, um seine Querachse (X-Richtung) drehbar, in einem größeren, ihn umgebenden äußeren Rahmen (5) gelagert,
- Der Rahmen äußere (5) ist um seine Hochachse (Y-Richtung) in einem äußeren Block (3) drehbar gelagert, so daß die Drehachsen der inneren Blöcke (2) und die des äußeren Rahmens (5) gleichgerichtet sind,
- Es sind Führungsstangen (10) vorhanden, auf denen der äußere Block (3) mit dem darin aufgehängten kardanischen System Bewegungen in Z-Richtung ausführen kann,
- Im Inneren des Dehnungsaufnehmers sind unter Nutzung der Rohre (21) Kühlkanäle ausgebildet,
- Die Basisplatte (1) enthält Bohrungen zum Durchlauf des Kühlmittels, vorzugsweise Wasser.

2. Meßvorrichtung gemäß Anspruch 1, **gekennzeichnet dadurch**, daß zur Meßsignalerzeugung ein berührungsloser Meßaufnehmer (22), vorzugsweise nach dem Wirbelstromprinzip arbeitend, eingesetzt wird.

3. Meßvorrichtung gemäß Anspruch 1, **gekennzeichnet dadurch,** daß zur Erzeugung definierter Anfahrpositionen einstellbare Arretierbolzen (17) vorhanden sind.

4. Meßvorrichtung gemäß Anspruch 1, **gekennzeichnet dadurch,** daß zur Voreinstellung der Meßspitzenbasis lₒ ein Arretierblock (19) mit einstellbaren Arretierbolzen (18) vorhanden ist.

5. Meßvorrichtung gemäß Anspruch 1, **gekennzeichnet dadurch,** daß zylindrische Druckfedern (16) zum Andrücken der kardanischen Lagerung in der Ruhelage gegen die Arretierstifte (17) und beim Meßvorgang gegen das Meßobjekt (15) vorhanden sind.

6. Meßvorrichtung gemäß den Ansprüchen 1 und 5, **gekennzeichnet dadurch,** daß ein mit Meßmarken versehener Taststift (13) zur Anzeige der Auflagekraft in Z-Richtung vorhanden ist.

7. Meßvorrichtung gemäß Anspruch 1, **gekennzeichnet dadurch,** daß die Meßbasis lₒ durch das paarweise Einsetzen von abgekröpften Meßtastern (14) anstelle von geraden Meßtastern definiert vergrößert oder verkleinert werden kann.

8. Meßvorrichtung gemäß den Ansprüchen 1 und 2, **gekennzeichnet dadurch,** daß zusätzlich zu den vorhandenen Meßtastern (14) weitere Meßtaster, die nicht in der X-Z-Ebene liegen, vorhanden sind.

9. Meßvorrichtung gemäß den Ansprüchen 1 und 2, **gekennzeichnet dadurch,** daß zusätzlich zu dem vorhandenen Meßaufnehmer (22) weitere, um definierte Winkel in der X-Y-Ebene versetzt angeordnete Meßaufnehmer (22) vorhanden sind.

## Claims

1. Measuring device for the measurement of thermally or mechanically induced tensile strains in the range of high temperatures of the measurement object of up to approximately 2300°C, with a preferred working range from room temperature up to approximately 1600°C and with a pressure-related range of use from vacuum up to approximately 100 bar, characterized by the combination of the following features:
- Two measuring traces (14) are clamped in an inner block (2) in each case,
- The inner blocks (2) arranged at the mutual distance 1 are mounted in an inner frame (4) so as to be rotatable independently of one another about their vertical axes (Y-direction),
- The inner frame (4) is mounted, so as to be rotatable about its transverse axis (X-direction), in a larger outer frame (5) surrounding it,
- The outer frame (5) is mounted rotatably about its vertical axis (Y-direction) in an outer block (3), so that the axes of rotation of the inner blocks (2) and that of the outer frame (5) are equidirectional,
- There are guide rods (10), on which the outer block (3), together with the cardanic system suspended therein, can execute movements in the Z-direction,
- Cooling ducts are formed in the interior of the tensile-strain sensor by utilizing the tubes (21),
- The baseplate (1) contains bores for the passage of the coolant, preferably water.

2. Measuring device according to Claim 1, characterized in that a contactless measuring transducer (22), preferably working on the eddy-current principle, is used for generating measurement signals.

3. Measuring device according to Claim 1, characterized in that adjustable stop pins (17) are provided for producing defined approach positions.

4. Measuring device according to Claim 1, characterized in that a stop block (19) having adjustable stop pins (18) is provided for presetting the measuring-tip base l₀.

5. Measuring device according to Claim 1, characterized in that cylindrical compression springs (16) are provided for pressing the cardanic mounting against the stop pins (17) in the position of rest and against the measurement object (15) during the measuring operation.

6. Measuring device according to Claims 1 and 5, characterized in that a tracer pin (13) having measuring marks is provided for indicating the bearing force in the Z-direction.

7. Measuring device according to Claim 1, characterized in that the measuring base l₀ can be increased or reduced in a defined manner by using bent measuring traces (14) in pairs instead of straight measuring traces.

8. Measuring device according to Claims 1 and 2, characterized in that further measuring traces, which do not lie in the X-Z plane, are provided in addition to the existing measuring traces (14).

9. Measuring device according to Claims 1 and 2, characterized in that further measuring transducers (22), arranged so as to be offset at defined angles in the X-Y plane, are provided in addition to the existing measuring transducer (22).

## Revendications

1. Dispositif de mesure pour mesurer des dilatations induites thermiquement ou mécaniquement pour des températures de l'objet à mesurer appartenant à une plage haute jusqu'à 2 300° C avec avantageusement une plage de travail allant de la température ambiante jusqu'à 1 600° C, et avec un domaine d'utilisation en pression allant du vide jusqu'à environ 100 bars, caractérisé par la combinaison des caractéristiques suivantes :
- deux capteurs de mesure (14) sont respectivement serrés dans un bloc interne (2),
- les deux blocs internes (2) agencés avec un écartement 1 sont montés mobiles en rotation indépendamment l'un de l'autre autour d'axes verticaux (direction Y) dans un cadre interne (4),
- le cadre interne (4) est monté mobile en rotation autour de son axe transversal (direction X) dans un cadre externe (5) plus grand entourant le cadre interne,
- le cadre externe (5) est monté mobile en rotation autour de son axe vertical (direction Y) dans un bloc externe (3) de telle sorte que les axes de rotation du bloc interne (2) et du cadre externe (5) soient alignés,
- il est prévu des tiges de guidage (10) avec lesquelles on peut imposer des déplacements dans la direction (Z) au bloc externe (3) avec son système cardinal suspendu,
- à l'intérieur des capteurs de dilatation sont ménagés des canaux de refroidissement par utilisation de tubes (21),
- la plaque de base (1) comprend des perçages pour le passage de moyens de refroidissement, avantageusement de l'eau.

2. Dispositif de mesure selon la revendication 1, caractérisé en ce qu'on utilise, pour générer un signal de mesure, un capteur de mesure sans contact avantageusement travaillant selon le principe de courant de Foucault.

3. Dispositif de mesure selon la revendication 1, caractérisé en ce qu'on prévoit des boulons d'arrêt (17) réglables pour réaliser une position de départ prédéterminée.

4. Dispositif de mesure selon la revendication 1, caractérisé en ce qu'on prévoit un bloc d'arrêt (19) avec des boulons d'arrêt réglables (18) pour prérégler l'écartement de base lₒ des pointes de mesure.

5. Dispositif de mesure selon la revendication 1, caractérisé en ce qu'on prévoit des ressorts d'appui cylindriques (16) pour, au repos, appuyer le montage cardinal contre les tiges d'arrêt (17) et, lors du procédé de mesure, contre l'objet à mesurer (15).

6. Dispositif de mesure selon la revendication 1 ou 5, caractérisé en ce qu'il est prévu une tige de mesure (13) comprenant des marques de mesure pour indication de la force d'appui dans la direction Z.

7. Dispositif de mesure selon la revendication 1, caractérisé en ce que l'écartement de base de mesure lₒ peut être agrandi ou réduit de manière prédéfinie par l'installation d'une paire de capteurs de mesure (14) coudés au lieu de capteurs rectilignes.

8. Dispositif de mesure selon les revendications 1 et 2, caractérisé en ce qu'on prévoit, en plus des capteurs de mesure (14) prévus, d'autres capteurs de mesure ne se situant pas dans le plan (X-Z).

9. Dispositif de mesure selon les revendications 1 et 2, caractérisé en ce qu'il est prévu, en plus du capteur de mesure (22), d'autres capteurs de mesure pour établir l'angle dans le plan X-Y.
